# EUROPEAN PATENT SPECIFICATION

(11) **EP 3 584 045 B1**
(45) Date of publication and mention of the grant of the patent: **17.11.2021**
(21) Application number: 19180692.6
(22) Date of filing: 17.06.2019
(51) Int. Cl.: B26D 3/26, B26D 7/01

(54) **MOULD SUPPORT, CUTTER MODULE AND CUTTER MACHINE FOR PIECES OF FRUIT, IN PARTICULAR PINEAPPLE**
FORMHALTER, SCHNEIDEMODUL UND SCHNEIDEMASCHINE FÜR FRÜCHTE, INSBESONDERE ANANAS
SUPPORT POUR MOULE, MODULE DE COUPE ET MACHINE COUPE-FRUITS, EN PARTICULIER LES ANANAS

(30) Priority: 19.06.2018 PT 2018110791
(43) Date of publication of application: 25.12.2019
(73) Proprietor: Sersounox - Equipamentos Para Indústria Alimentar, Lda, 2590-418 Sobral De Monte Agraço (PT)
(72) Inventor: CARVALHO DE SOUSA, JOSÉ ANTÓNIO, 2590-418 SOBRAL DE MONTE AGRAÇO (PT)
(74) Representative: do Nascimento Gomes, Rui

(56) References cited:
- US-A1- 2009 211 418
- US-A1- 2015 266 196

## Description

### FIELD OF THE INVENTION

The present invention is enclosed in the area of fruit cutting machines, preferably for cutting fruits with the configuration of the pineapple, with a body and a crown.

### PRIOR ART

Several kinds of solutions exist in the art for cutting fruits with a configuration as that of the pineapple.

It is the case of patent application US4490912, which discloses a pineapple cutter consisting of a cylinder, with a cutter portion and a pair of handles suitable for moving the cylinder across the body of the pineapple, thereby removing its rind. Such patent application also discloses an embodiment comprising elements which cross the referred cylinder and support a central cylinder, thereby providing removal of the rind and cutting the pulp of the pineapple in several sections. Such consists of a very simple and manual solution, which provides manual removal of the rind, core and cutting in several parts. Other manual solutions exist, although more complex, as is the case of US2014212555.

Other, more automatized, solutions exists, as is the case of patent application EP3005887, which provides cutting of a fruit, in particular a pineapple, by sequentially cutting the body of the pineapple into "shell portions".

Closer solutions to that of the present invention exist, providing a section to place a fruit with a configuration as that of the pineapple, for subsequent cutting. It is the case of application WO2013036110. However, such solution - as that of EP3005887 - is of high complexity, being specifically directed for highly automatized industrial plants.

Moreover, patent application US 2015/0266196 discloses an automated food processing machine able to receive a whole fruit or vegetable and press it through a blade set, thereby forming slices or wedges. The machine comprises several pieces which form the whole machine, including a receptacle in which the whole fruit is placed. It addresses the reduction of labor and chance of injury in the cutting of fruit.

Patent application US 2009/0211418 discloses an apparatus for cutting fruit which includes a receptacle divided into segments and slots, defining slices of the fruit to be cut. It addresses the automation of the cutting of fruit.

It is the purpose of the present invention to provide a simple and yet effective solution for positioning and subsequently cutting a pineapple in two equal longitudinal parts, while being highly compact.

All of the above referred solutions are generic, and do not provide a useful solution for pineapples, specifically not allowing a clean cut of both the body and the crown of a pineapple.

It is also the purpose of the present invention to provide a highly effective solution directed for supermarkets, where operators cut a pineapple into two parts for subsequent packaging and deliver to a customer.

### SUMMARY OF THE INVENTION

It is therefore an object of the present invention a mould support (1) for a piece of fruit cutter comprising i) sections for confinement (3) of a body of the piece of fruit in place and ii) a lower base (2), wherein the sections for confinement (3) is fixed to the lower base (2) and comprises a piece of fruit entry portion (4) and at least two confinement elements (31) - a first and second confinement elements (31) - with mirrored configurations and spaced apart, which project from the lower base (2), such two confinement elements:
- comprising side and lower walls, connected at least partially to each other, which confine a piece of fruit perpendicularly to the lower base (2), and
- providing an entry portion (4) between the first and second confinement elements (31).
wherein the mould support further comprises two crown positioning elements with mirrored configurations and spaced apart, each:
- comprising a crown positioning wall and a corresponding crown positioning plate, each crown positioning plate projecting from one of the crown positioning walls with an angle between 20°-45°, the crown positioning plates being such that when pushed towards the entry portion (4), the crown of a piece of fruit is directed in between the crown positioning walls,
being placed in parallel with one of the confinement elements (31), in particular each crown positioning wall being parallel to a corresponding side wall (310) of the confinement elements (31).

Such mould support (1) a simple and yet effective solution for positioning and subsequently cutting a piece of fruit, in particular a pineapple, in a plurality of parts, as its configuration provides for the stable placement of the body of such piece of fruit in the sections for confinement (3), for subsequent cutting. Furthermore, the first and second confinement elements (31) with mirrored configurations and spaced apart provide not only for simple construction principles but also that a blade (11) efficiently crosses the sections for confinement (3), thereby cutting the piece of fruit. Where a blade (11) crosses the whole sections for confinement (3), the body of the therein placed fruit is completely cut. Fruits such as a pineapple have different sections of hardness and configuration, the core, the shell and the crown being hard, however in different grades. Also with such conditions in mind, the solution provides an even and clean cut.

In addition, the crown positioning elements provide for positioning and confinement of a crown of a piece of fruit such as a pineapple, which thus remains still under crossing of a blade (11), and thereby being also cut in half, resulting in an evenly cut piece of fruit, with a clean cut.

In an inventive aspect of the mould support (1) of the present invention, it further comprises two arms (5) projecting from the lower base (2), each arm being independently connected to one of the confinement elements (31), preferably to a side wall (310). Such arms (5) provide for a higher extension between the confinement elements (31) and the lower base (2), where the crown of the piece of fruit, namely of a pineapple, can extend. Thus, a pineapple can be herein positioned upside down, such that - during cutting with a blade (11) which impacts the fruit from the side of the sections for confinement (3), the fruit is first cut in its body and then in its crown, providing a clean cut of both the body and the crown. Preferably, the arms (5) have the same height, such height being at least twice that of the side walls (310) of the confinement elements (31).

In embodiments comprising crown positioning elements for securing the crown of the piece of fruit, each arm is independently connected to one of the crown positioning elements, preferably to a crown positioning wall. The combination of arms (5) with the crown positioning elements provides an additional portion of space - corresponding to the extension of the arms (5) -, below the sections for confinement (3), where the crown positioning elements are placed and better secure the crown, thereby providing an enhanced clean cut.

In an advantageous embodiment of the mould support (1), each confinement element (31) comprises a side wall (310) which confines the piece of fruit in two directions perpendicular to the lower base (2), the side wall (310) of the first confinement element (31) being mirrored of the side wall (310) of the second confinement element (31). Such configuration provides for a simple and efficient way to confine the body of a piece of fruit such as a pineapple. Optionally, each side wall (310) has a curved shape or - preferably - it consists of two plates making an angle between each other of 90°-120°.

In an inventive aspect of the mould support (1), combinable with any of the described embodiments, each confinement element (31) further comprises two positioning plates, each projecting from one of the side walls (310) with an angle between 20°-45°, the positioning plates being such that when pushed towards the entry portion (4), a piece of fruit is directed into such entry portion (4). Such plates provide for enhanced positioning of the piece of fruit into the entry portion (4), thereby providing an efficient and usable solution for supermarkets.

It is also an object of the present invention a cutter module for a piece of fruit cutter comprising i) a movable member (10) with one blade (11) and ii) a mould support (1) as of any of the described embodiments, wherein said blade (11) of the movable member (10), when moved in a rectilinear motion aligned with the mould support (1), crosses at least partially the sections for confinement (3) through the space between the two confinement elements (31), thereby cutting a piece of fruit therein placed in two pieces. Preferably, said piece of fruit consists of a pineapple, thereby being cut longitudinally in half by said rectilinear motion of the movable member (10) and corresponding blade (11).

It is also an object of the present invention a piece of fruit cutter machine (100) comprising the cutter module as described in any of its embodiments, a base structure and a movable structure, the lower base (2) of the cutter support being placed on top of the base structure, and the movable member (10) with one blade (11) being connected to the movable structure and aligned with the lower base (2) so that, under rectilinear motion of the movable member (10) by action of the movable structure, the blade (11) crosses at least partially the sections for confinement (3) through the space between the two confinement elements (31), thereby cutting a piece of fruit therein placed in two pieces.

It is yet an object of the present invention the use of the mould support (1) as of any of the described embodiments for placing a pineapple for subsequent longitudinal cut, the body of the pineapple being positioned through the entry portion (4) into the sections for confinement (3), with the crown of the pineapple being positioned between the lower walls and the lower base (2), and the cut with a blade (11) starting from the body of the pineapple.

It is yet an object of the present invention the use of the cutter module as of any of the described embodiments for placing a pineapple and subsequently cutting it longitudinally, the body of the pineapple being positioned through the entry portion (4) into the sections for confinement (3), with the crown of the pineapple being positioned between the lower walls and the lower base (2), and the cut with the blade (11) starting from above, through the body of the pineapple and then the crown.

### DESCRIPTION OF FIGURES

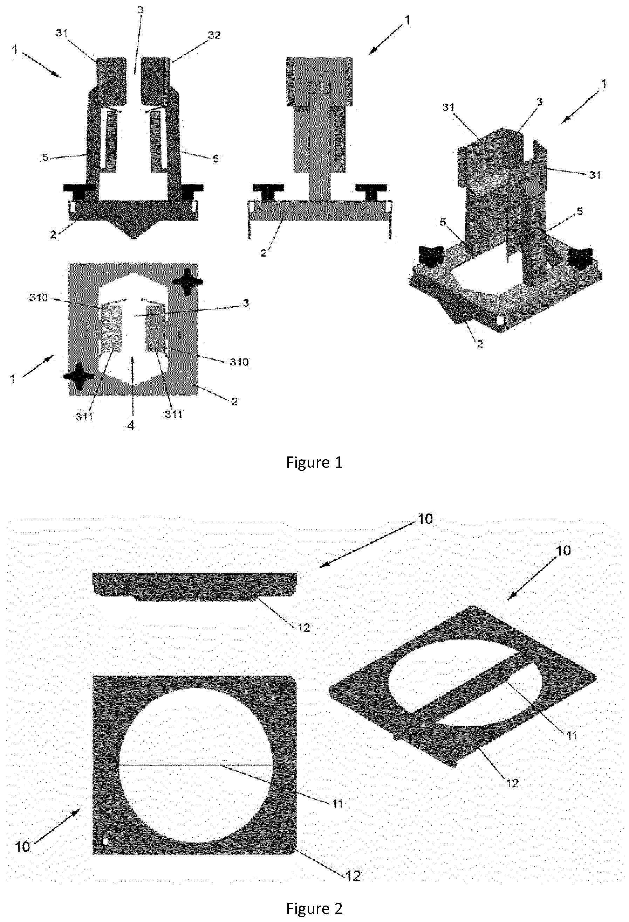

Figure 1 - several views of a representation of an embodiment of the mould support (1) for a piece of fruit cutter machine (100) of the present invention, comprising a "squared configuration", in which the sections for confinement (3) of a body of the piece of fruit in place is defined by the first and second confinement elements (31) with mirrored configurations, spaced apart by a certain spacing distance and forming the entry portion (4) into the confinement section. The confinement elements (31) comprise side and lower walls, the side walls (310) having two plates making an angle of about 100° between each other. The lower walls confine the piece of fruit in a direction making an angle of about 30° with the lower base (2) and another angle of about 110° with the side walls (310). The confinement elements (31) are connected to the base through the arms (5). Also connected to the arms (5) are the two crown positioning elements with mirrored configurations and spaced apart, each comprising a crown positioning wall and a corresponding crown positioning plate, each crown positioning plate projecting from one of the crown positioning walls with an angle of about 30°, the crown positioning plates providing that, when pushed towards the entry portion (4), the crown of a piece of fruit is directed in between the crown positioning walls. Furthermore, the crown positioning elements are placed in parallel with one of the confinement elements (31), in particular each crown positioning wall being parallel to a corresponding side wall (310) of the confinement elements (31). The arms (5) are placed on the lower base (2), such base having a central opening with a hexagonal shape. Furthermore, the base has a specific shape suitable for aligning and coupling to a piece of fruit cutter machine (100). The base also has two screw fasteners with corresponding fastening handles, placed in opposite sides, and for adequate coupling to the piece of fruit cutter machine (100).
Figure 2 - several views of a representation of an embodiment of the movable member (10) of the cutter module of the present invention, having a frame (12) with a central opening, the blade (11) being coupled to the frame (12) and extending diametrically through the central opening, thereby being suitable for moving through the sections for confinement (3) and where, under the rectilinear motion of the blade (11) member through said sections for confinement (3). The central opening and the blade (11) are such that the confinement elements (31) pass in between the blade (11) and the frame (12), the blade (11) thereby crossing the sections for confinement (3). The frame (12) has a substantially planar configuration, the central opening has a circular form, and the blade (11) is placed perpendicularly to the planar configuration of the frame (12), crossing diametrically in the central opening.

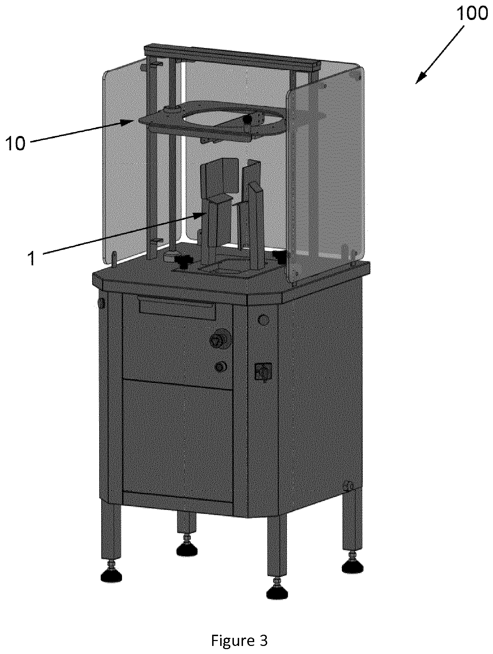

Figure 3 - representation of an embodiment of the piece of fruit cutter machine (100) of the present invention, comprising a cutter module, a base structure and a movable structure, the lower base (2) of the cutter support being placed on top of the base structure, and the movable member (10) with one blade (11) being connected to the movable structure and aligned with the lower base (2) so that, under rectilinear motion of the movable member (10) by action of the movable structure, the blade (11) crosses at least partially the sections for confinement (3) through the space between the two confinement elements (31), thereby cutting a piece of fruit therein placed in two pieces.

### DETAILED DESCRIPTION

The more general and advantageous configurations of the present invention are described in the Summary of the invention. Such configurations are detailed below in accordance with other advantageous and/or preferred embodiments of implementation of the present invention.

In another inventive aspect of the mould support (1) of the present invention, each confinement element (31) comprises a lower wall (311) which confines the piece of fruit in a direction making an angle between 0°-45° with the lower base (2) and an angle between 90°-120° with the side wall (310). Such configuration provides for a simple and efficient way to confine and support below the body of a piece of fruit such as a pineapple (thereby for supporting the weight of the body). The effect of the weight of the body of the piece of fruit pushes it onto the lower walls which, being inclined, promote such effect.

Preferably, the lower base (2) has a substantially planar configuration and comprising at least one coupling and alignment element, suitable for coupling and aligning the mould support (1) to a piece of fruit cutter machine (100), and, more preferably:
- each coupling and alignment element consists of a screw fastener with corresponding fastening handle, and
- the lower base (2) has a specific shape suitable for coupling to a corresponding shape of a piece of fruit cutter machine (100).

Also in another preferred embodiment of the mould support (1) of the present invention, combinable with any above described, the lower base (2), centred in its substantially planar configuration, has an opening, suitable for the extension of a crown of a piece of fruit.

In a preferred embodiment of the cutter module of the present invention, the movable member (10) further comprises a frame (12) with a central opening, the blade (11) being coupled to the frame (12) and extending diametrically through the central opening, thereby being suitable for moving through the sections for confinement (3) and where, under said rectilinear motion of the blade (11) member through said sections for confinement (3), the central opening and the blade (11) are such that the confinement elements (31) pass in between the blade (11) and the frame (12), the blade (11) thereby crossing the sections for confinement (3). Preferably, the frame (12) has a substantially planar configuration, the central opening has a circular form, and the blade (11) is placed perpendicularly to the planar configuration of the frame (12), crossing diametrically in the central opening.

In one of many possible embodiments of the piece of fruit cutter, the base structure comprises buttons which, under pressing, actuate an electromechanical comprising the movable structure, and thereby moving the movable member (10) with one blade (11) in the referred rectilinear motion, the blade (11) crosses at least partially the sections for confinement (3) through the space between the two confinement elements (31), thereby cutting a piece of fruit therein placed in two pieces. The movable structure preferably comprises guides to which the movable member (10) is connected and through which it moves, the guides being aligned with the mould support (1).

As will be clear to one skilled in the art, the present invention should not be limited to the embodiments described herein, and a number of changes are possible which remain within the scope of the present invention as defined in the appended claims.

The preferred embodiments shown above are combinable, in the different possible forms, being herein avoided the repetition all such combinations.

## Claims

1. Mould support (1) for a piece of fruit cutter comprising i) sections for confinement (3) of a body of the piece of fruit in place and ii) a lower base (2), wherein the sections for confinement (3) is fixed to the lower base (2) and comprises a piece of fruit entry portion (4) and at least two confinement elements (31) - first and second confinement elements (31) - with mirrored configurations and spaced apart, which project from the lower base (2), such two confinement elements:
- comprising side and lower walls, connected at least partially to each other, which confine a piece of fruit perpendicularly to the lower base (2), and
- providing an entry portion (4) between the first and second confinement elements (31),
**characterised in that** the mould support (1) further comprises two crown positioning elements with mirrored configurations and spaced apart, each crown positioning element:
- comprising a crown positioning wall and a corresponding crown positioning plate, each crown positioning plate projecting from one of the crown positioning walls with an angle between 20°-45°, the crown positioning plates being such that when pushed towards the entry portion (4), the crown of a piece of fruit is directed in between the crown positioning walls,
- being placed in parallel with one of the confinement elements (31), in particular each crown positioning wall being parallel to a corresponding side wall (310) of the confinement elements (31).

2. Mould support (1) according to the previous claim wherein each confinement element (31) comprises a side wall (310) which confines the piece of fruit in two directions perpendicular to the lower base (2), the side wall (310) of the first confinement element (31) being mirrored of the side wall (310) of the second confinement element (31).

3. Mould support (1) according to the previous claim wherein each side wall (310) has a curved shape or consists of two plates making an angle between each other of 90°-120°.

4. Mould support (1) according to any of the preceding claims wherein it further comprises two arms (5) projecting from the lower base (2), each arm being independently connected to one of the confinement elements (31), preferably to a side wall (310) and preferably the arms (5) having the same height, such height being at least twice that of the side walls (310) of the confinement elements (31).

5. Mould support (1) according to any of the preceding claims wherein each confinement element (31) comprises a lower wall (311) which confines the piece of fruit in a direction making an angle between 0°-45° with the lower base (2) and an angle between 90°-120° with the side wall (310).

6. Mould support (1) according to any of the preceding claims wherein each confinement element (31) further comprises two positioning plates, each projecting from one of the side walls (310) with an angle between 20°-45°, the positioning plates being such that when pushed towards the entry portion (4), a piece of fruit is directed into such entry portion (4).

7. Mould support (1) according to any of the claims 4-6, wherein each arm is independently connected to one of the crown positioning elements, preferably to a crown positioning wall.

8. Mould support (1) according to any of the preceding claims, the lower base (2) having a substantially planar configuration and comprising at least one coupling and alignment element, suitable for coupling and aligning the mould support (1) to a piece of fruit cutter machine (100), and, preferably:
- each coupling and alignment element consists of a screw fastener with corresponding fastening handle, and
- the lower base (2) has a specific shape suitable for coupling to a corresponding shape of a piece of fruit cutter machine (100),
and, preferably, the lower base (2), centred in its substantially planar configuration, has an opening, suitable for the extension of a crown of a piece of fruit.

9. Cutter module for a piece of fruit cutter **characterised in that** it comprises i) a movable member (10) with one blade (11) and ii) a mould support (1) as of any of the claims 1-8, wherein said blade (11) of the movable member (10), when moved in a rectilinear motion aligned with the mould support (1), crosses at least partially the sections for confinement (3) through the space between the two confinement elements (31), thereby cutting a piece of fruit therein placed in two pieces.

10. Cutter module according to the previous claim wherein said piece of fruit consists of a pineapple, thereby being cut longitudinally in half by said rectilinear motion of the movable member (10) and corresponding blade (11).

11. Cutter module according to any of the claims 9-10 wherein the movable member (10) further comprises a frame (12) with a central opening, the blade (11) being coupled to the frame (12) and extending diametrically through the central opening, thereby being suitable for moving through the sections for confinement (3) and where, under said rectilinear motion of the blade (11) member through said sections for confinement (3), the central opening and the blade (11) are such that the confinement elements (31) pass in between the blade (11) and the frame (12), the blade (11) thereby crossing the sections for confinement (3) and, preferably, the frame (12) has a substantially planar configuration, the central opening has a circular form, and the blade (11) is placed perpendicularly to the planar configuration of the frame (12), crossing diametrically in the central opening.

12. Piece of fruit cutter machine (100) **characterised in that** it comprises the cutter module of the previous claim, a base structure and a movable structure, the lower base (2) of the cutter support being placed on top of the base structure, and the movable member (10) with one blade (11) being connected to the movable structure and aligned with the lower base (2) so that, under rectilinear motion of the movable member (10) by action of the movable structure, the blade (11) crosses at least partially the sections for confinement (3) through the space between the two confinement elements (31), thereby cutting a piece of fruit therein placed in two pieces.

13. Use of the mould support (1) of any of the claims 1-8 for placing a pineapple for subsequent longitudinal cut, the body of the pineapple being positioned through the entry portion (4) into the sections for confinement (3), with the crown of the pineapple being positioned between the lower walls and the lower base (2), and the cut with a blade (11) starting from the body of the pineapple.

14. Use of the cutter module of any of the claims 9-11 for placing a pineapple and subsequently cutting it longitudinally, the body of the pineapple being positioned through the entry portion (4) into the sections for confinement (3), with the crown of the pineapple being positioned between the lower walls and the lower base (2), and the cut with the blade (11) starting from above, through the body of the pineapple and then the crown.

## Patentansprüche

1. Formträger (1) für ein Obststückschneider, das i) Abschnitte zum Einschließen (3) eines Körpers des Obststückes an Ort und Stelle, und ii) eine untere Basis (2), umfasst, worin die Abschnitte zum Einschließen (3) an die untere Basis (2) befestigt ist und ein Obststückeingabebereich (4) und mindestens zwei Einschließ-Elemente (31) umfasst - erstes und zweites Einschließ-Element (31) - mit gespiegelten Konfigurationen und getrennt verteilt, welche von der unteren Basis (2) herausragen, solche zwei Einschließ-Elemente:
- umfassen seitliche und untere Wände, die zumindest teils aneinander verbuden sind, die ein Obststück senkrecht zu der unteren Basis (2) einschließen, und
- bieten einen Eingabebereich (4) zwischen dem ersten und zweiten Einschließ-Element (31),
**dadurch gekennzeichnet, dass** der Formträger (1) weiterhin zwei Kronenpositionierungselemente mit gespiegelten Konfigurationen und getrennt verteilt, umfasst, jedes Kronenpositionierungselement:
- umfasst eine Kronenpositionierungswand und eine entsprechende Kronenpositionierungsplatte, jede Kronenpositionierungsplatte projiziert von einer der Kronenpositionierungswände mit einem Winkel von zwischen 20°-45°, worin die Kronenpositionierungsplatten so beschaffen sind, dass, wenn sie in Richtung des Eingabebereichs (4) geschoben werden, die Krone eines Obststückes zwischen die Kronenpositionierungswände hindurchgeführt wird,
- wird parallel zu einem der Einschließ-Elemente (31) positioniert, insbesondere ist jede Kronenpositionierungswand parallel zu einer entsprechenden Seitenwand (310) der Einschließ-Elemente (31).

2. Formträger (1) nach vorherigem Anspruch, worin jedes Einschließ-Element (31) eine Seitenwand (310) umfasst, welche das Obststück in zwei Richtungen senkrecht zu der unteren Basis (2) einschließt, worin die Seitenwand (310) des ersten Einschließ-Elements (31) gegenüber der Seitenwand (310) des zweiten Einschließ-Elements (31) gespiegelt ist.

3. Formträger (1) nach vorherigem Anspruch, worin jede Seitenwand(310) eine gebogene Form hat oder aus zwei Platten besteht, die zwischeneinander einen Winkel von 90°-120° bilden.

4. Formträger (1) nach jedem der vorherigen Ansprüche, worin er weiterhin zwei Arme (5) umfasst, die von der unteren Basis (2) hervorragen, jeder Arm ist unabhängig an eines der Einschließ-Elemente (31) verbunden, vorzugsweise an eine Seitenwand (310) und vorzugsweise haben die Arme (5) die selbe Höhe, diese Höhe ist mindestens doppelt die der Seitenwände (310) der Einschließ-Elemente (31).

5. Formträger (1) nach jedem der vorherigen Ansprüche, worin jedes Einschließ-Element (31) eine untere Wand (311) umfasst, welche das Obststück in eine Richtung einschließt, und mit der unteren Basis (2) einen Winkel zwischen 0°-45° bilden und mit der Seitenwand (310) einen Winkel zwischen 90°-120° bilden.

6. Formträger (1) nach jedem der vorherigen Ansprüche, worin jedes Einschließ-Element (31) weiterhin zwei Positionierungsplatten umfasst, jede projiziert von einer der Seitenwande (310) mit einem Winkel von zwischen 20°-45°, worin die Positionierungsplatten so beschaffen sind, dass, wenn sie in Richtung des Eingabebereichs (4) geschoben werden, ein Obststück durch diesen Eingabebereich (4) geführt wird.

7. Formträger (1) nach jedem der Ansprüche 4-6, worin jeder Arm unabhängig an einen der Kronenpositionierungselemente verbunden ist, vorzugsweise an eine Kronenpositionierungswand.

8. Formträger (1) nach jedem der vorherigen Ansprüche, worin die untere Basis (2) eine wesentlich flache Konfiguration hat und mindestens ein Kupplungs- und Ausrichtungselement umfasst, geeignet um den Formträger (1) an eine Obststückschneidemaschine (100) zu kuppeln und ausrichten, und, vorzugsweise:
- besteht jedes Kupplungs- und Ausrichtungselement aus einem Schraubbefestiger mit entsprechendem Befestigungsgriff, und
- die untere Basis (2) hat eine spezifische Form, die geeignet ist, um an eine entsprechende Form einer Obststückschneidemaschine (100) gekuppelt zu werden,
und, vorzugsweise, weist die untere Basis (2), die in ihrer wesentlich flachen Konfiguration zentriert ist, eine Öffnung auf, die für die Verlängerung einer Krone eines Obststückes, geeignet ist.

9. Schneidemodul für ein Obststückschneider, **dadurch gekennzeichnet, dass** es folgendes umfasst: i) ein bewegliches Teil (10) mit einer Klinge (11), und ii) ein Formträger (1) nach jedem der Ansprüche 1-8, worin besagte Klinge (11) des beweglichen Teils (10), wenn es in einer geradlinigen Bewegung, an den Formträger (1) ausgerichtet bewegt wird, zumindest teilweise die Abschnitte zum Einschließen (3) durch den Raum zwischen den zwei Einschließ-Elementen (31) durchquert, dabei schneidet es ein dort platziertes Obststück in zwei Stücke.

10. Schneidemodul nach vorherigem Anspruch, worin das besagte Obststück eine Ananas ist, dabei wird diese durch die besagte geradlinige Bewegung des beweglichen Teils (10) und der entsprechenden Klinge (11) in Längsrichtung halbiert.

11. Schneidemodul nach jedem der Ansprüche 9-10, worin das bewegliche Teil (10) weiterhin einen Rahmen (12) mit einer zentralen Öffnung umfasst, worin die Klinge (11) ist an den Rahmen (12) gekoppelt und breitet sich diametral durch die zentrale Öffnung aus, dadurch ist sie geeignet, um durch die Abschnitte zum Einschließen (3) bewegt zu werden und wo, bei der besagten geradlinigen Bewegung der Klinge (11) durch die besagten Abschnitte zum Einschließen (3), die zentrale Öfnnung und die Klinge (11) so beschaffen sind, dass die Einschließ-Elemente (31) zwischen der Klinge (11) und dem Rahmen (12) durchlaufen, die Klinge (11) durchkreuzt dabei die Abschnitte zum Einschließen (3) und, vorzugsweise, hat der Rahmen (12) eine wesentlich flache Konfiguration, die zentrale Öfnnung hat eine Kreisform, und die Klinge (11) ist senkrecht zu der flachen Konfiguration des Rahmens (12) platziert und durchquert diametral in der zentralen Öffnung.

12. Obststückschneidemaschine (100), **dadurch gekennzeichnet, dass** sie das Schneidemodul des vorheringen Anspruchs, eine Grundstruktur und eine bewegliche Struktur umfasst, worin die untere Basis (2) des Schneideträgers auf der Grundstruktur platziert ist, und das bewegliche Teil (10) mit einer Klinge (11) ist an die bewegliche Struktur verbunden und an die untere Basis (2) so ausgerichtet, dass bei einer geradliniger Bewegung des beweglichen Teils (10) durch die Wirkung der beweglichen Struktur, die Klinge (11) mindestens teileweise die Abschnitte zum Einschließen (3) durch den Raum zwischen den zwei Einschließ-Elementen (31) durchquert, dabei schneidet es ein dort platziertes Obststück in zwei Stücke.

13. Nutzung des Formträgers (1) jedes der Ansprüche 1-8, um eine Ananas für einen anschließenden längsgerichteten Schnitt zu platzieren, worin der Körper der Ananas durch den Eingabebereich (4) in die Abschnitte zum Einschließen (3) platziert wird, wobei die Krone der Ananas zwischen den unteren Wänden und der unteren Basis (2) platziert wird, und der Schnitt mit einer Klinge (11) beginnt vom Körper der Ananas aus.

14. Nutzung des Schneidemoduls jedes der Ansprüche 9-11, um eine Ananas zu platzieren und diese anschließenden längsgerichtet zu schneiden, worin der Körper der Ananas durch den Eingabebereich (4) in die Abschnitte zum Einschließen (3) platziert wird, wobei die Krone der Ananas zwischen den unteren Wänden und der unteren Basis (2) platziert wird, und der Schnitt mit der Klinge (11) beginnt von oben, durch den Körper der Ananas und dann die Krone.

## Revendications

1. Support de moule (1) pour un coupe-fruits comprenant i) des sections de confinement (3) du corps d'un fruit en place et ii) une base inférieure (2), dans lequel les sections de confinement (3) sont fixées à la base inférieure (2) et comportent une partie d'entrée (4) du fruit et au moins deux éléments de confinement (31) - les premier et deuxième éléments de confinement (31) - à configuration en miroir et espacés, qui font saillie de la base inférieure (2), lesdits deux éléments de confinement :
- comportant des parois latérales et inférieures, reliées au moins partiellement les unes aux autres, qui confinent un fruit perpendiculairement à la base inférieure (2), et
- fournissant une partie d'entrée (4) entre les premier et deuxième éléments de confinement (31),
**caractérisé en ce que** le support de moule (1) comprend en outre deux éléments de positionnement de couronne à configuration en miroir et espacés, chaque élément de positionnement de couronne :
- comportant une paroi de positionnement de couronne et une plaque de positionnement de couronne correspondante, chaque plaque de positionnement de couronne faisant saillie de l'une des parois de positionnement de couronne avec un angle compris entre 20° et 45°, les plaques de positionnement de couronne étant telles que lorsqu'elles sont poussées vers la partie d'entrée (4), la couronne d'un fruit est dirigée entre les parois de positionnement de couronne,
- étant placé en parallèle avec l'un des éléments de confinement (31), en particulier chaque paroi de positionnement de couronne étant parallèle à une paroi latérale correspondante (310) des éléments de confinement (31).

2. Support de moule (1) selon la revendication précédente dans lequel chaque élément de confinement (31) comprend une paroi latérale (310) qui confine le fruit dans deux directions perpendiculairement à la base inférieure (2), la paroi latérale (310) du premier élément de confinement (31) étant disposée en miroir avec la paroi latérale (310) du deuxième élément de confinement (31).

3. Support de moule (1) selon la revendication précédente dans lequel chaque paroi latérale (310) a une forme courbée ou est constituée de deux plaques formant un angle entre elles de 90° à 120°.

4. Support de moule (1) selon l'une quelconque des revendications précédentes dans lequel celui-ci comprend en outre deux bras (5) qui font saillie de la base inférieure (2), chaque bras étant relié indépendamment à l'un des éléments de confinement (31), de préférence à une paroi latérale (310) et les bras (5) ayant de préférence la même hauteur, cette hauteur étant au moins le double de celle des parois latérales (310) des éléments de confinement (31).

5. Support de moule (1) selon l'une quelconque des revendications précédentes dans lequel chaque élément de confinement (31) comprend une paroi inférieure (311) qui confine le fruit dans une direction formant un angle compris entre 0° et 45° avec la base inférieure (2) et un angle compris entre 90° et 120° avec la paroi latérale (310).

6. Support de moule (1) selon l'une quelconque des revendications précédentes dans lequel chaque élément de confinement (31) comprend en outre deux plaques de positionnement, chacune faisant saillie de l'une des parois latérales (310) avec un angle compris entre 20° et 45°, les plaques de positionnement étant telles que lorsqu'elles sont poussées vers la partie d'entrée (4), un fruit est dirigé dans ladite partie d'entrée (4).

7. Support de moule (1) selon l'une quelconque des revendications 4 à 6 dans lequel chaque bras est relié indépendamment à l'un des éléments de positionnement de couronne, de préférence à une paroi de positionnement de couronne.

8. Support de moule (1) selon l'une quelconque des revendications précédentes, la base inférieure (2) ayant une configuration sensiblement plane et comprenant au moins un élément de couplage et d'alignement, approprié pour coupler et aligner le support de moule (1) à une machine de coupe de fruits (100) et, de préférence :
- chaque élément de couplage et d'alignement étant constitué d'un dispositif de fixation à vis avec une poignée de fixation correspondante, et
- la base inférieure (2) a une forme spécifique appropriée pour le couplage à la forme correspondante d'une machine de coupe de fruits (100),
et, de préférence, la base inférieure (2), au centre de sa configuration sensiblement plane, comporte une ouverture adaptée pour l'extension de la couronne d'un fruit.

9. Module de coupe pour un coupe-fruits **caractérisé en ce qu'**il comprend i) un élément mobile (10) avec une lame (11) et ii) un support de moule (1) selon l'une quelconque des revendications 1 à 8, dans lequel ladite lame (11) de l'élément mobile (10), lorsqu'elle est déplacée suivant un mouvement rectiligne en alignement avec le support de moule (1), traverse au moins partiellement les sections de confinement (3) à travers l'espace entre les deux éléments de confinement (31), coupant ainsi en deux morceaux le fruit qui y est placé.

10. Module de coupe selon la revendication précédente dans lequel ledit fruit est un ananas, étant coupé ainsi longitudinalement en deux par ledit mouvement rectiligne de l'élément mobile (10) et de la lame correspondante (11).

11. Moule de coupe selon l'une quelconque des revendications 9 et 10 dans lequel l'élément mobile (10) comprend en outre un cadre (12) avec une ouverture centrale, la lame (11) étant couplée au cadre (12) et s'étendant diamétralement à travers l'ouverture centrale, étant ainsi appropriée pour se déplacer dans les sections de confinement (3) et dans lequel, avec ledit mouvement rectiligne de la lame (11) dans lesdites sections de confinement (3), l'ouverture centrale et la lame (11) sont telles que les éléments de confinement (31) passent entre la lame (11) et le cadre (12), la lame (11) traversant ainsi les sections de confinement (3) et, de préférence, le cadre (12) a une configuration sensiblement plane, l'ouverture centrale présente une forme circulaire et la lame (11) est placée perpendiculairement à la configuration plane du cadre (12), traversant diamétralement l'ouverture centrale.

12. Machine de coupe de fruits (100) **caractérisée en ce qu'**elle comprend le module de coupe de la revendication précédente, une structure de base et une structure mobile, la base inférieure (2) du support du coupe-fruits étant placée sur la structure de base, et l'élément mobile (10) avec une lame (11) étant relié à la structure mobile et aligné avec la base inférieure (2) de telle sorte que, du fait du mouvement rectiligne de l'élément mobile (10) par action de la structure mobile, la lame (11) traverse au moins partiellement les sections de confinement (3) à travers l'espace entre les deux éléments de confinement (31), coupant ainsi en deux morceaux un fruit qui y est placé.

13. Utilisation du support de moule (1) de l'une quelconque des revendications 1 à 8 pour le placement d'un ananas pour son découpage longitudinal ultérieur, le corps de l'ananas étant positionné à travers la partie d'entrée (4) dans les sections de confinement (3), la couronne de l'ananas étant positionnée entre les parois inférieures et la base inférieure (2), et la coupe de la lame (11) commençant à partir du corps de l'ananas.

14. Utilisation du module de coupe de l'une quelconque des revendications 9 à 11 pour le placement d'un ananas et son découpage longitudinal ultérieur, le corps de l'ananas étant positionné à travers la partie d'entrée (4) dans les sections de confinement (3), la couronne de l'ananas étant positionnée entre les parois inférieures et la base inférieure (2), et la coupe de la lame (11) commençant depuis le haut, à travers le corps de l'ananas et ensuite la couronne.
